# EUROPEAN PATENT SPECIFICATION

(11) **EP 4 212 391 B1**
(45) Date of publication and mention of the grant of the patent: **04.06.2025**
(21) Application number: 22151851.7
(22) Date of filing: 17.01.2022
(51) Int. Cl.: B60R 3/02

(54) **COLLAPSIBLE STEP ASSEMBLY FOR AN INDUSTRIAL VEHICLE**
ZUSAMMENKLAPPBARE STUFENANORDNUNG FÜR EIN INDUSTRIEFAHRZEUG
ENSEMBLE MARCHEPIED PLIANTE POUR VÉHICULE INDUSTRIEL

(43) Date of publication of application: 19.07.2023
(73) Proprietor: VOLVO TRUCK CORPORATION, 405 08 Göteborg (SE)
(72) Inventor: Madhuchandra, K S, 560050 BANGALORE (IN); K S, Sudeendra Thirtha Koushik, 560085 BANGALORE (IN); Hegde, Gangubai, 560097 BANGALORE (IN)
(74) Representative: Lavoix

(56) References cited:
- EP-A1- 1 800 640
- WO-A1-2006/078195
- WO-A1-2015/017497
- FR-A3- 2 932 737
- JP-A- H08 156 690
- KR-A- 20140 033 823
- US-A- 4 200 303

## Description

### Technical Field

This disclosure relates to a step assembly for equipping an industrial vehicle, like for example a long-haul truck.

### Background Art

Industrial vehicles like trucks are equipped with boarding steps to help the truck driver, or passenger, get into the cabin of the truck. Usually, the boarding steps are installed on the side of the truck, between the front wheel and the front bumper, approximately at the height of the front bumper. Since the steps can't protrude from the side of the truck, a recessed area is formed on the side of the truck and the steps are disposed in this recessed area. This recessed area has to be deep enough to accommodate steps of sufficient depth to be safe and comfortable to use. Such installation has several drawbacks. First, the step and the frame of the entry door are almost in the same vertical plane. Therefore, access is not particularly easy as users generally feel too close from the door, making access impractical. Another drawback is that the recessed area alters the otherwise sleek shape of the side of the cabin. A consequence of this recessed area is increased aerodynamic losses and increased drag coefficient. Furthermore, the recessed area is basically an empty space except for locating the steps, and it would be beneficial to be able to arrange some components in this area. Document US 4200 303 A, disclsoes a telescopic boarding step member comprising a footrest attached to an inner tube which can slide inside a fixed step member, so that the boarding step member can be deployed or retracted for vehicle ingress/egress. The fixed step member is a hollow sleeve.

It would therefore be useful to have a step assembly that doesn't need to be installed in a recess of the side of the truck.

### Summary

To achieve this goal, it is proposed to provide a collapsible step as defined by the features of claim 1.

When the truck is being driven, the collapsible step assembly is in stowed position and doesn't protrude from the side of the truck. When the driver opens his door to get out of the truck, the action of opening the door also deploys a mobile step member which projects out of the surface of the truck and can be used to climb into the cabin. It is not necessary to create a recessed area in order to accommodate one or several fixed steps. The side of the truck can be smooth, therefore drag coefficient can be reduced. Furthermore, access is easier that with a fixed step, because the deployed step can project sufficiently far from the vertical plan of the door. Furthermore, the space usually devoted to the creation of the recessed area can now be used to fit components, like for example an electronic control module for the front headlights.

The following features, can be optionally implemented, separately or in combination one with the others:

In an embodiment, in the stowed position, the mobile step member is set-back from an external surface of the cabin.

According to another embodiment, in the stowed position, the mobile step member is flush with an external surface of the cabin.

According to an embodiment of the collapsible step assembly, the actuation member is an actuation cable.

An actuation cable makes a reliable mechanical link that can take different shapes and thus can easily be adapted to various configurations.

In an embodiment, the collapsible step assembly comprises:
- a check link configured to be linked to the entry door of the cabin,
and the actuation cable is configured to link the collapsible step member and the check link.

Using the check link of the door to pull the actuation cable allows an actuation of the collapsible step assembly which limits the number of additional parts to be fitted.

According to an embodiment of the collapsible step assembly, the check link is configured for stopping the entry door in a predetermined stopping position, the predetermined stopping position being an intermediate position between a closed position and a fully opened position.

The predetermined stopping position is selected among a set of stopping positions.

In an embodiment, the collapsible step assembly comprises an elastic member configured for moving the collapsible step member from the deployed position to the stowed position in response to a closing of the entry door.

Once the driver has entered the cabin and closes his door, the elastic member brings back the collapsible step member into its stowed position. No action from the driver is necessary.

In an embodiment, the elastic member is a return spring.

For example, the elastic member may be a coil spring.

Alternatively, the elastic member may be a torsion bar.

According to one aspect of the disclosed step assembly, the collapsible step member is configured to slide linearly between the stowed position and the extended position.

A linear stroke of the mobile step member is comprised between 10 centimeters and 30 centimeters.

In an embodiment of the collapsible step assembly, the collapsible step member reaches the deployed position for an opening degree of the entry door inferior to a maximum opening degree of the entry door.

In an embodiment, the collapsible step member leaves the stowed position for an opening degree of the entry door superior to a minimum opening degree of the entry door.

The opening degree of the entry door for which the collapsible step member leaves the stowed position can be the closed position of the entry door.

The opening degree of the entry door for which the collapsible step member leaves the stowed position can be a position of the entry door different from the closed position of the entry door.

According to the invention, the collapsible step assembly, the collapsible step member comprises:
- a fixed step member,
- a mobile step member,
and the mobile step member is configured to be moved along a translation axis when the collapsible step member is moved from the stowed position to the deployed position.

According to an embodiment of the collapsible step assembly, a rate of increase of a position of the mobile step member is proportional to a rate of increase of an opening degree of the entry door, at least for a fraction of a movement stroke from the stowed position to the deployed position.

According to the invention the following is included in the collapsible step assembly:
- the fixed step member comprises a fixed base plate and at least a first translation shaft extending from the fixed base plate in a direction parallel to the translation axis,
- the mobile step member comprises a mobile base plate and at least a second translation shaft extending from the mobile base plate in a direction parallel to the translation axis,

the collapsible step assembly further comprising at least a load bearing element arranged between the fixed base plate and the mobile base plate in a direction parallel to the translation axis, the load bearing element being mechanically linked to the mobile step member,
in which the load bearing element comprises :
   a first reception hole configured to receive the first translation shaft,
   a second reception hole configured to receive the second translation shaft,
   in which the load bearing element is configured to transmit to the fixed step member via the first translation shaft a mechanical load applied to the mobile step member along a direction perpendicular to the translation axis.

This arrangement provides a simple and sturdy structure.

The upper surface of the fixed step member, of the load bearing element and of the mobile step member forms a support surface for the foot of a user. The translation of the elements between them allows a deployment of the collapsible step assembly.

In an embodiment, the first translation shaft and the second translation shaft are offset one from the other.

In an embodiment, the first translation shaft may be identically sized as the second translation shaft.

According to an embodiment of the collapsible step assembly, the fixed step member comprises two first translation shafts extending in a direction parallel to the translation axis and the mobile step member comprises two second translation shafts extending in a direction parallel to the translation axis, one first translation shaft and one second translation shaft being arranged alternately along a direction of extension of the fixed base plate.

Having two pairs of translation shafts provides a natural stability and spreads the efforts, minimizing maximum efforts.

The two first translation shafts and the two second translation shafts may be coplanar.

Alternatively, the two first translation shafts and the two second translation shafts can be in different parallel planes.

In an embodiment, the two first translation shafts are identically sized.

In an embodiment, the two second translation shafts are identically sized.

For example, a diameter of the first translation shaft is comprised between 15 millimeters and 25 millimeters.

Also for example, a diameter of the second translation shaft is comprised between 12 millimeters and 25 millimeters.

The distance between the direction of extension of the two first translation shafts may be comprised between 10 centimeters and 20 centimeters.

In an embodiment, the direction of extension of the fixed base plate is perpendicular to the translation axis.

According to an embodiment of the collapsible step assembly, the collapsible step assembly comprises a plurality of load bearing elements, each load bearing element comprising :
a first reception hole configured to receive the first translation shaft,
a second reception hole configured to receive the second translation shaft,
the load bearing elements are disposed next to the other along the translation axis, each load bearing element is mechanically linked to the mobile step member,
and each load bearing element is configured to transmit to the fixed step member a mechanical load applied to the mobile step member along a direction perpendicular to the translation axis.

The loading bearing elements may be identical.

Production can be standardized.

In an embodiment, a length measured in the direction of the translation axis of the first reception hole is comprised between 16 millimeters and 26 millimeters.

In an embodiment, a length measured in the direction of the translation axis of the second reception hole is comprised between 13 millimeters and 26 millimeters.

These values provide adequate resistance and adequate contact pressure between parts.

According to an embodiment, the collapsible step assembly comprises a scissor mechanism linking together the fixed step member, the load bearing elements and the mobile step member.

In an embodiment, a first scissor mechanism is disposed at a first axial end of the fixed step member, of the load bearing elements and of the mobile step member.

In an embodiment, an articulation axis of a pair of linkages is located on a load bearing member.

In an embodiment, an articulation axis between a linkage from one pair of linkages and a linkage from the consecutive pair of linkages is located within a load bearing member.

In an embodiment, a second scissor mechanism is disposed at a second axial end of the fixed step member, of the load bearing elements and of the mobile step member.

Having one scissor mechanism at each axial end of the elements provides a better guiding of the mobile elements.

The disclosure also refers to a truck comprising a collapsible step assembly as described above, in which the actuation cable links the collapsible step member and an entry door of the cabin,
and in which the collapsible step member is moved from the stowed position to the deployed position by the actuation cable in response to an opening of the entry door.

In an embodiment, the translation axis makes an angle comprises between 0° and 5° with a transversal axis of the truck.

Alternatively, the translation axis can make an angle larger than 10° with a transversal axis of the truck.

The access to the cabin is made easier because more room is made available between the step and the rotation axis of the entry door.

According to an embodiment of the truck, the collapsible step assembly comprises a second collapsible member configured to be moved from the stowed position to the deployed position synchronously with the collapsible step assembly.

According to an embodiment, the truck comprises a first collapsible step assembly as described earlier and a second collapsible step assembly as described earlier. The first collapsible step assembly comprises a first collapsible step member configured to be moved from the stowed position to the deployed position by the actuation cable in response to an opening of a first entry door, and the second collapsible step assembly comprises a second step member configured to be moved from the stowed position to the deployed position by the actuation cable in response to an opening of a second entry door.

### Brief Description of Drawings

Other features, details and advantages will be shown in the following detailed description and on the figures, on which:
- Figure 1 is a schematic side view of an industrial vehicle with a step assembly according to the prior art,
- Figure 2 is a general view of a collapsible step assembly according to an embodiment,
- Figure 3 is a detailed view of the collapsible step assembly of figure 2,
- Figure 4 is a partial detailed view of a step member comprised in the collapsible step assembly of figure 3,
- Figure 5 is a schematic side view of an industrial vehicle equipped with a collapsible step assembly according to an embodiment,
- Figure 6 is a top view of an industrial vehicle equipped with a collapsible step assembly according to an embodiment,
- Figure 7 is another detailed view of the collapsible step assembly of figure 2,
- Figure 8 is a detailed view of the collapsible step assembly of figure 7,
- Figure 9 is a curve illustrating the operation of a collapsible step assembly according to two different embodiments,
- Figure 10 illustrates a mechanism of an embodiment of a collapsible step assembly,
- Figure 11 illustrates a mechanism of another embodiment of a collapsible step assembly.

### Description of Embodiments

In order to make the figures easier to read, the various elements are not necessarily represented to scale. In these figures, identical elements receive the same reference number. Certain elements or parameters can be indexed, i.e. designated for example by first element or second element, or first parameter and second parameter, etc. The purpose of this indexing is to differentiate elements or parameters that are similar, but not identical. This indexing does not imply a priority of one element, or one parameter over another, and their names can be interchanged. When it is mentioned that a subsystem comprises a given element, the presence of other elements in this subsystem is not excluded.

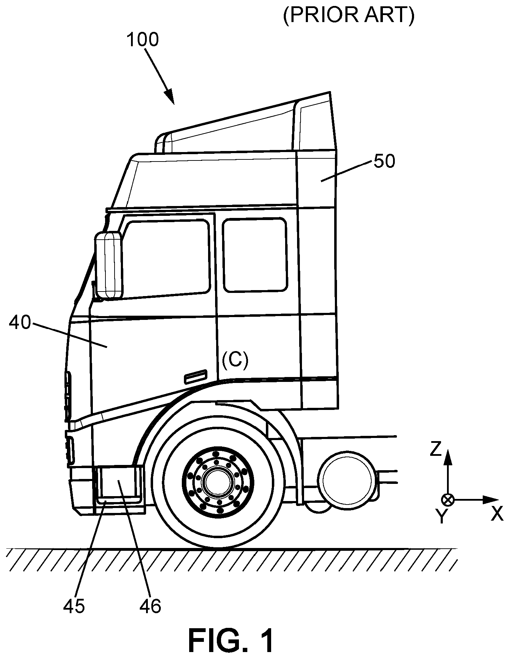

Figure 1 refers to a truck 100 according to the prior art. In order to access the cabin 50 once the entry door 40 is opened, a driver of the truck may step on a fixed step 45. This fixed step provides a support at an intermediate height between the level of the ground and the level of the door sill. The step is wide enough, i.e. large enough along the longitudinal direction X, so that both feet of the user can comfortably fit on the step 45. The step 45 is also deep enough, i.e. large enough along the transverse axis Y, so that a convenient and steady support is provided. The step 45 is housed in a recessed area 46 of the side of the truck, having a box-like shape. The presence of this recessed area 46 induces sharp angles on the side of the truck 100, which induces a disturbance to the air flow along the side of the truck when the truck is driven.

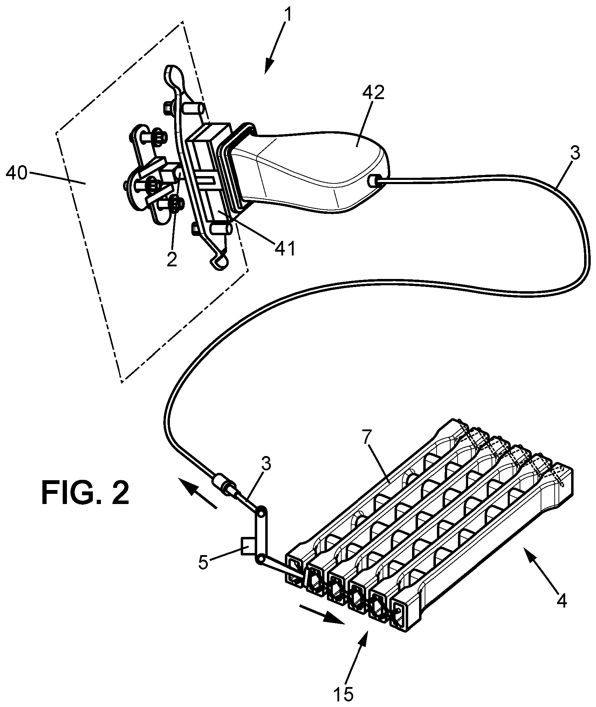

Figure 2 illustrates a collapsible step assembly 1 for helping a user entering a cabin 50 of an industrial vehicle 100. This collapsible step assembly 1 according to the invention comprises:
- a collapsible step member 4 configured to be movable between :
   -- a stowed position S in which the collapsible step member 4 is set-back from or flush with an external surface of the industrial vehicle 100, and
   -- a deployed position E in which the collapsible step member 4 projects out of the external surface of the industrial vehicle 100,
- an actuation member 3 configured to link the collapsible step member 4 and an entry door of the cabin 40,
and the collapsible step member 4 is configured to be moved from the stowed position S to the deployed position E by the actuation member 3 in response to an opening of the entry door 40.

The stowed position S of the collapsible step member 4 is a non-functional position for the purpose of providing a support for accessing or getting out of the truck. The deployed position E is a functional position of the collapsible step member 4, in which a support is provided for an easy access or exit of the industrial vehicle. The industrial vehicle is a truck in the illustrated example, but the present device can also be used in other types of industrial vehicles.

The entry door 40 of the truck 100 is configured for swiveling between a closed position C and a fully opened position O. The entry door is fixed to the frame of the cabin by several hinges, not represented.

When the truck is moving, the collapsible step assembly 1 is in stowed position S and doesn't protrude from the side of the truck 100. When a user opens the entry door 40 to get in or out of the truck, the action of opening the door 40 also deploys the collapsible step member 4 so that it forms a supporting surface on which the user may step and transfer its weight to safely reach the ground or the cabin. The collapsible step member 4 can be arranged so that it is flush with the surface of the industrial vehicle 100 when it is in stowed position S.

In an embodiment, in the stowed position S, the mobile step member 9 is flush with an external surface of the cabin. In an embodiment, in the stowed position S, the mobile step member 9 is set-back from an external surface of the cabin.

In either case, the side of the truck 100 doesn't need any recessed area in order to accommodate one or several fixed steps. The side surface of the truck 100 can be smooth, therefore the drag coefficient of the industrial vehicle can be reduced, resulting in better fuel economy or range. The access to the cabin is also made easier than with a fixed step, because the deployed step member can project sufficiently far from the vertical plan of the door. Furthermore, the space usually devoted to the creation of the recessed area can now be used to fit components or subsystems, like for example an electronic control module for the front headlights.

In the illustrated embodiment of the collapsible step assembly 1, the actuation member 3 is an actuation cable 3. When the entry door 40 is opened, the actuation cable 3 is put under tension and the actuation cable 3 pulls the collapsible step member 4 into the deployed position E. An actuation cable makes a reliable mechanical link that can take different shapes and thus can easily be adapted to various configurations. A single collapsible step assembly can equip various models without modification.

As illustrated on figure 2, the collapsible step assembly 1 comprises:
- a check link 2 configured to be linked to the entry door 40 of the cabin 50,
and the actuation cable 3 is configured to link the collapsible step member 4 and the check link 2.

Using the check link of the entry door 40 to pull the actuation cable 3 allows an actuation of the collapsible step assembly 1 which limits the number of additional parts to be fitted.

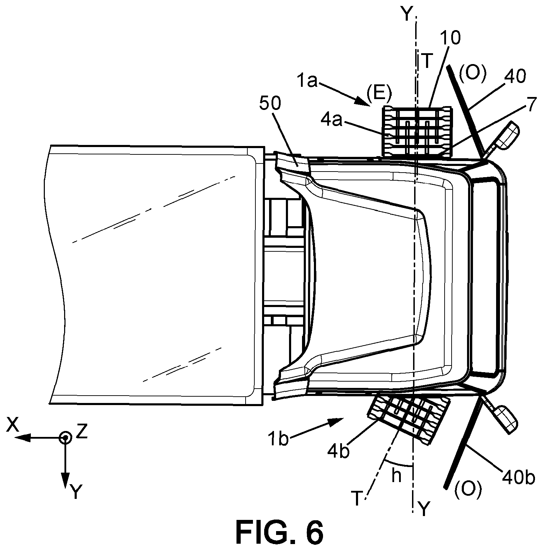

The truck 100, as illustrated for example on figure 6, comprises a collapsible step assembly 1a. The actuation cable 3 links the collapsible step member 4 and an entry door of the cabin 40,
and the collapsible step member 4 is moved from the stowed position S to the deployed position E by the actuation cable 3 in response to an opening of the entry door 40.

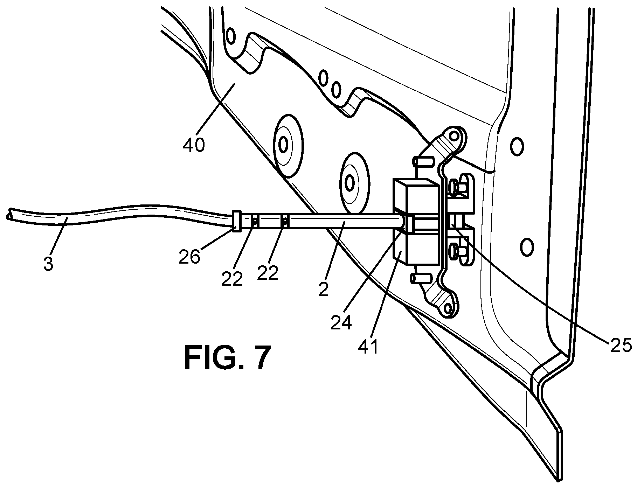

As detailed on figure 7, the check link 2 has an elongated shape similar to a rod. Functionally, the check link 2 is a linking rod. The check link 2 comprises a first end 25 configured to be linked to the entry door 40 of the cabin, and a second end 26 linked to a first end of the actuation cable 3. The check link 2 is pivotably linked to the entry door 40 of the cabin. The check link 2 is fixed to the entry door 40 by a pivot pin. A rotation of the check link 2 relatively the entry door 40 is allowed. A translation motion of the check link 2 relatively the entry door 40 is blocked. A section of the check-link 2 passes through a bracket 41 fixed to the frame of the cabin 40. The actuation cable is contained, near the bracket 41, in a wire holder 42.

The check link 2 may be made of sheet metal. The check link 2 is horizontal when it is installed in the entry door 40 of the industrial vehicle 100.

According to an embodiment of the collapsible step assembly 1, the check link 2 is configured for stopping the entry door 40 in a predetermined stopping position, the predetermined stopping position being an intermediate position between a closed position C and a fully opened position O. The predetermined stopping position is selected among a set of stopping positions. The set of stopping positions may comprise three stopping positions.

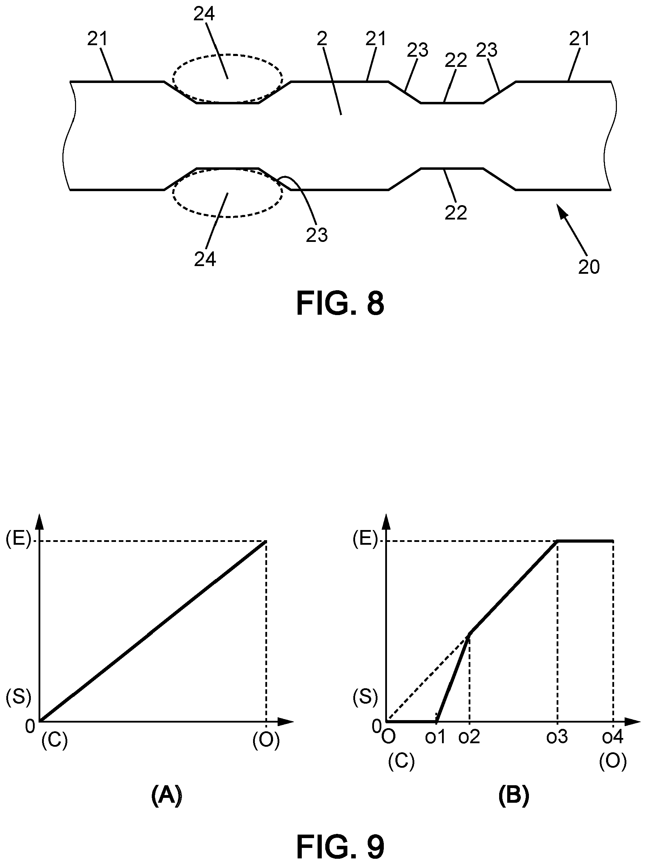

As detailed on figure 8, the check link 2 comprises a friction area 20 configured to be pressed by elastic pegs 24. The elastic pegs 24 are linked to the bracket 41. The friction area comprises a flat portion 21 and a thinned portion 22. The transition between the flat portion 21 and the thinned portion 22 is made by a slope 23. When the check link 2 is moved, the elastic pegs 24 slides over the friction area 20. A stopping position is obtained when an elastic peg 24 engages into the thinned portion 22. Additional effort is then required to force the pegs 24 moving over the slope 23 until it reaches another flat portion 21. The tension of the elastic pegs 24 and the angle of the transition slopes 23 are designed to obtain the targeted resistance to maintain the entry door 40 in a stable position, without requiring an excessive effort to then overcome a stopping position. The number of stopping positions is determined by the number of thinned portions 22 incorporated in the check link 2. Two stopping positions have been pictured on the example of figure 8.

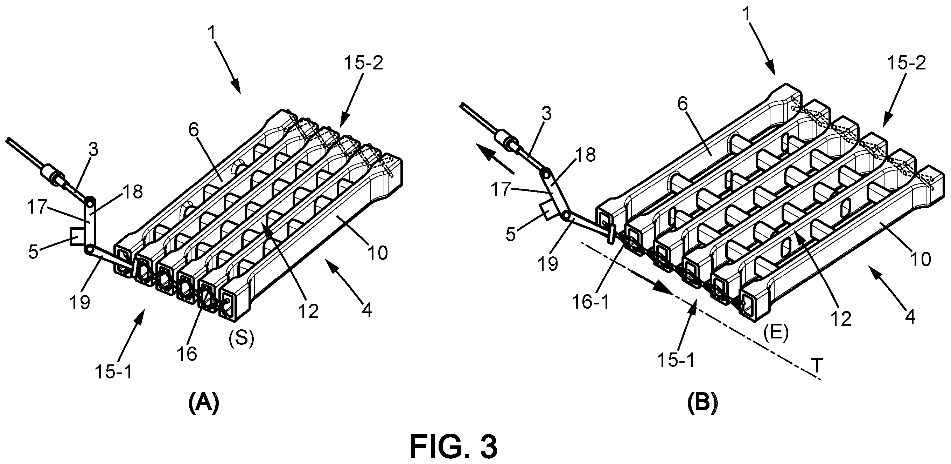

The collapsible step assembly 1 comprises an elastic member 5 configured for moving the collapsible step member 4 from the deployed position E to the stowed position S in response to a closing of the entry door 40. The actuation cable 3 operates the collapsible step member 4 against the biaising action of the elastic member 5, schematically represented on figure 3. Once the driver has entered the cabin 50 and closes the entry door 40, the elastic member 5 brings back the collapsible step member 4 into its stowed position S. No action from the driver is necessary. Therefore there is risk of driving the truck 100 with the collapsible step member mistakenly left in deployed position. The elastic member 5 is for example a return spring. The elastic member 5 may for instance be a coil spring. Alternatively, the elastic member 5 may be a torsion bar.

As illustrated on figure 3, the collapsible step member 4 is configured to slide linearly between the stowed position S and the extended position E. A linear stroke of the mobile step member 9 is comprised between 10 centimeters and 30 centimeters. The direction along which the collapsible step member 4 deploys and retracts is indicated by the axis T.

The collapsible step member 4 can be made of sheet metal. For example, aluminum and magnesium can be used. The collapsible step member 4 may also be made of plastic, for example injected plastic reinforced with glass fibers.

Figure 9 illustrates the relationship between the position of the collapsible step member, in vertical axis, versus the opening degree of the entry door 40 in horizontal axis. Opening degree is a term equivalent to angular position of the entry door. The closed position C of the entry door is obtained for an opening degree equal to 0. The fully opened position O of the entry door is obtained the opening degree o4. Similarly, the stowed position S is corresponding to position O on the vertical axis, and the deployed position E is corresponding to the maximum of the curve.

In the illustrated embodiment of the collapsible step assembly 1, the collapsible step member 4 reaches the deployed position E for an opening degree of the entry door 40 inferior to a maximum opening degree of the entry door 40. On the example of part B of figure 9, the fully deployed position E is obtained when the opening degree of entry door 40 reaches the degree o3, and remains constant until the entry door is fully opened, corresponding to opening degree o4.

The collapsible step member 4 leaves the stowed position S for an opening degree a of the entry door 40 superior to a minimum opening degree of the entry door 40. In the embodiment corresponding to part B of figure 9, the opening degree of the entry door 40 for which the collapsible step member 4 leaves the stowed position S is a position o1 of the entry door 40 different from the closed position C of the entry door 40. In other words, the deployment of the collapsible step assembly 1 begins only once the opening of the entry door 40 has already been initiated, and the door has already been opened by a certain amount. This configuration makes the initial opening easier, and the deployment of the collapsible step assembly can make use of the momentum built during the initial phase where the door is free. Deployment of the collapsible step member 4 starts when the opening degree of the entry door 40 reaches the value marked o1 on part B of figure 9.

The minimum opening degree of the entry door 40 for which the collapsible step member 4 leaves the stowed position S can be one of the predetermined stopping positions of the entry door 40. These positions are determined by the position of the position of the thinned portions 22 along the check link 2.

In an embodiment corresponding to part A of figure 9, the minimum opening degree of the entry door 40 for which the collapsible step member 4 leaves the stowed position S can be the closed position C of the entry door 40. In that case, the deployment of the collapsible step assembly 1 begins simultaneously with the opening of the entry door 40.

According to an embodiment of the collapsible step assembly 1, a rate of increase of a position of the mobile step member 9 is proportional to a rate of increase of an opening degree of the entry door 40, at least for a fraction of a movement stroke from the stowed position S to the deployed position E. On the example of part B of figure 9, the feature is present between opening degree o2 and opening degree o3 of the entry door 40. On the example of part A of figure 9, the feature is present across the full range of opening degree of the entry door 40.

The mechanical structure of an embodiment of the collapsible step assembly 1 will now be described.

According to the invention, illustrated on figure 2 and figure 3, the collapsible step member 4 comprises:
- a fixed step member 6,
- a mobile step member 9,
and the mobile step member 9 is configured to be moved along a translation axis T when the collapsible step member 4 is moved from the stowed position S to the deployed position E.

The fixed step member 6 is considered fixed in a referential linked to the frame of the industrial vehicle 100. In other words, the fixed step member 6 is stationary with reference to the frame of the industrial vehicle 100. Temporary low-amplitude displacements resulting from vibrations are possible since they are practically unavoidable, without affecting the fixed feature of the fixed step member 6.

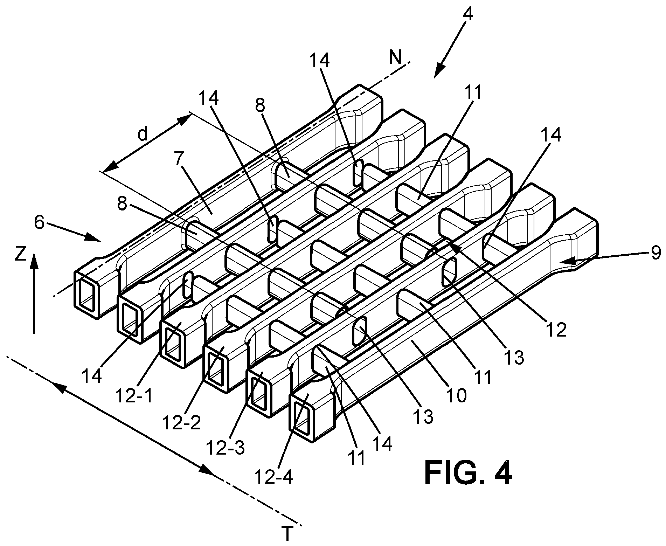

Figure 4 illustrates the detailed features of the collapsible step assembly 1.

The fixed step member 6 comprises a fixed base plate 7 and at least a first translation shaft 8 extending from the fixed base plate 7 in a direction parallel to the translation axis T,
the mobile step member 9 comprises a mobile base plate 10 and at least a second translation shaft 11 extending from the mobile base plate 10 in a direction parallel to the translation axis T.

The collapsible step assembly 1 further comprises at least a load bearing element 12 arranged between the fixed base plate 7 and the mobile base plate 10 in a direction parallel to the translation axis T, the load bearing element 12 being mechanically linked to the mobile step member 9.

The load bearing element 12 comprises:
a first reception hole 13 configured to receive the first translation shaft 8,
a second reception hole 14 configured to receive the second translation shaft 11,
and the load bearing element 12 is configured to transmit to the fixed step member 6 via the first translation shaft 8 a mechanical load applied to the mobile step member 9 along a direction perpendicular to the translation axis T.

This arrangement provides a simple and sturdy structure. The upper surface of the fixed step member 6, of the load bearing element 12, and of the mobile step member 9 forms a support surface for the foot of a user. The translation of the elements between them allows a deployment of the collapsible step assembly 1. The load bearing element transmits the load applied directly on itself, and the load applied on the mobile step member 9, to the fixed step member 6. As the parts can slide one relatively to the others, the step assembly can be deployed and retracted.

The first translation shaft 8 fits with radial play in the first reception hole 13. The second translation shaft 11 fits with radial play in the second reception hole 14. Friction between a load bearing element and the first and second translation shaft can be kept to a low value so that the effort required to deploy the collapsible step member 4 is kept to a low value.

The load bearing element 12 has a shape similar to a rod, and the reception holes 13 and 14 are transverse through holes. The first translation shaft 8 and the second translation shaft 11 are fitted into their respective reception hole 13, 14. The load bearing element 12 slides over the first translation shaft 8 and the second translation shaft 11 slides in the load bearing element 12 when the mobile step member 9 is moved relatively to the fixed step member 6.

The fixed step member 6 is metallic. The fixed step member 6 is for example made of steel, aluminum, or magnesium. The fixed step member 6 can also be made out of injected plastic. The mobile step member 9 is metallic. The mobile step member 9 is for example made of steel. The mobile step member 9 can also be made out of injected plastic.

The fixed base plate 7 is rigidly connected to the first translation shaft 8. The first translation shaft is for example welded to the fixed base plate 7. Similarly, the mobile base plate 10 is rigidly connected to the second translation shaft 11. The second translation shaft 11 is for example welded to the mobile base plate 10.

The first translation shaft 8 and the second translation shaft 11 are offset one from the other. In an embodiment, the first translation shaft may be identically sized as the second translation shaft. What is meant by identical is that the first translation shaft has same shape and same diameter as the second translation shaft.

According to the embodiment illustrated on figure 4, the fixed step member 6 comprises two first translation shafts 8 extending in a direction parallel to the translation axis T and the mobile step member 9 comprises two second translation shafts 11 extending in a direction parallel to the translation axis T, one first translation shaft 8 and one second translation shaft 11 being arranged alternately along a direction N of extension of the fixed base plate 7. Having two pairs of translation shafts provides a natural stability and spreads the efforts in the structure, minimizing maximum efforts.

The two first translation shafts 8 and the two second translation shafts 11 may be coplanar, as it is the case on figure 4. Alternatively and according to a non-represented embodiment, the two first translation shafts 8 and the two second translation shafts 11 can be in different parallel planes.

In the embodiment of figure 4, the two first translation shafts 8 are identically sized. The two second translation shafts 12 are also identically sized. In this example, a diameter of the first translation shaft 8 is comprised between 15 millimeters and 25 millimeters. Similarly, a diameter of the second translation shaft 11 is comprised between 12 millimeters and 25 millimeters.

The distance d between the direction of extension of the two first translation shafts 8 may be comprised between 10 centimeters and 20 centimeters. The direction N of extension of the fixed base plate 7 is perpendicular to the translation axis T.

On the example of figure 4, the mobile step member 9 comprises three second translation shafts 11 extending in a direction parallel to the translation axis T. The fixed step member 6 comprises two first translation shafts 8, each of the first translation shaft 8 being located between two consecutives second translation shafts 11 along the direction N of extension of the fixed base plate.

On the example of figure 4, the collapsible step assembly 1 comprises a plurality of load bearing elements 12, each load bearing element 12 comprising :
a first reception hole 13 configured to receive the first translation shaft 8,
a second reception hole 14 configured to receive the second translation shaft 11.

The load bearing elements 12 are disposed next to the other along the translation axis T,
each load bearing element 12 is mechanically linked to the mobile step member 9, and each load bearing element 12 is configured to transmit to the fixed step member 6 a mechanical load applied to the mobile step member 9 along a direction perpendicular to the translation axis T.

The plurality of load bearing elements comprises here four load bearing elements referenced respectively 12-1, 12-2, 12-3, 12-4. A different number of load bearing elements would also be possible. When the collapsible step assembly 1 is in the stowed position S, all the load bearing elements 12-1, 12-2, 12-3, 12-4 are engaged on both the first translation shaft 8 and the second translation shaft 11. More precisely, the first translation shaft 8 fits into the first reception hole 13 and the second translation shaft 11 fits into the second reception hole 14.

As the collapsible step assembly 1 is slided towards the deployed position E, the load bearing element 12-1, which is closer to the fixed base plate 6, disengages from the second transmission shaft 11. The second reception hole 14 is empty. Similarly, the load bearing element 12-4 which is closer to the mobile base plate 10 also disengages from the first transmission shafts 8. The first reception hole 13 is empty.

When the collapsible step assembly 1 is in the fully deployed position E, the load bearing element 12-1 which is closer to the fixed base plate 7 is disengaged from the second transmission shafts 11 and engaged around the first translation shafts 8. The load bearing element 12-4 which is closer to the mobile base plate 10 is disengaged from the first transmission shafts 8 and engaged around the second transmission shafts 11. The two intermediate bearing elements 12-2, 12-3 are engaged on both the first translation shafts 8 and the second transmission shafts 11. Having an engagement of at least two consecutive load bearing elements around a translation shaft avoid the mobile step member 9 tilting relatively to the fixed step member 6 and provides a good stability of the device under high vertical loads.

When the collapsible step member 4 is in the stowed position S, an axial end of the first translation shaft 8 may be in abutment against the mobile base plate 10. Alternatively, an axial end of the second translation shaft 11 may be in abutment against the fixed base plate 7.

The loading bearing elements 12 may be identical. Production can be standardized.

In the illustrated embodiment, a length measured in the direction of the translation axis T of the first reception hole 13 is comprised between 16 millimeters and 26 millimeters. Similarly, a length measured in the direction of the translation axis T of the second reception hole 14 is comprised between 13 millimeters and 26 millimeters. These values provide adequate resistance and adequate contact pressure between parts.

On figure 4 the mechanism linking together the various elements to obtain the deployment of the collapsible step member 4 has not been represented, in order to simplify figure 4.

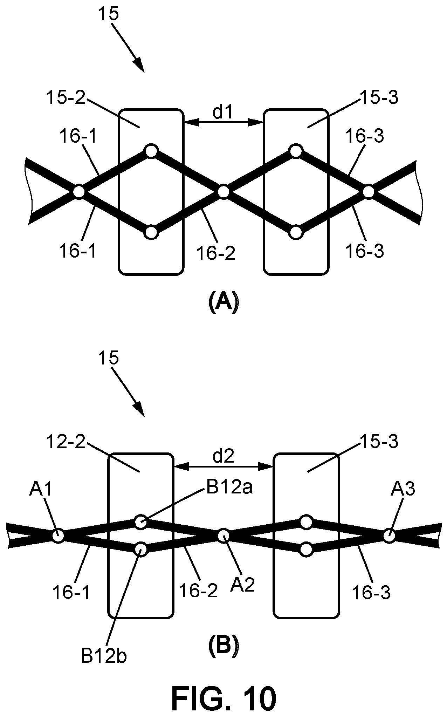

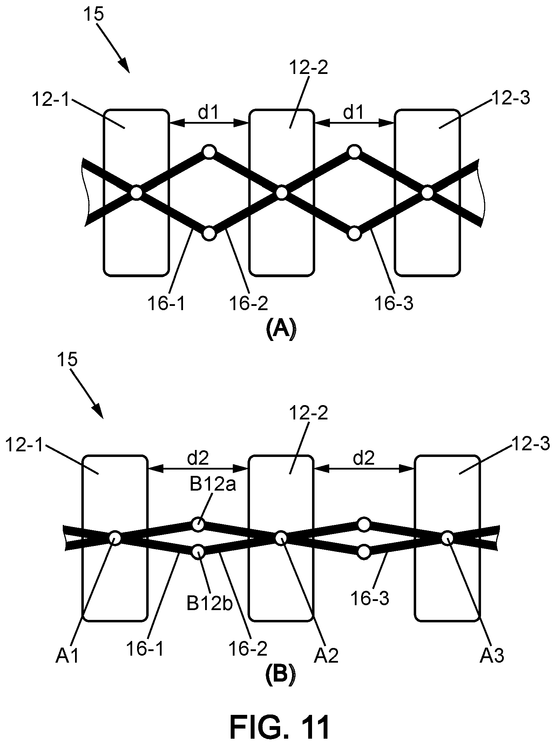

In an embodiment, represented on figure 10 and figure 11, the collapsible step assembly 1 comprises a scissor mechanism 15 linking together the fixed step member 6, the load bearing elements 12 and the mobile step member 9.

The scissor mechanism comprises a set of pair of linkages 16 pivotally fixed together and forming a crisscross pattern. Each pair of linkages links one element with the next element along a translation direction T. On the illustrated example, the collapsible step assembly 1 comprises 4 load bearing elements 12-1, 12-2, 12-3, 12-4. The fixed step member 6 is linked with a first load bearing element 12-1 by a pair of linkages. The mobile step member 9 is linked with the fourth load bearing element 12-4 by another pair of linkages. The first load bearing element 12-1 is linked with the second load bearing element 12-2, which is itself linked with the third load bearing element 12-3. The third load bearing element 12-3 is linked with the fourth load bearing element 12-4.

In each pair of linkages, each linkage is articulated relatively to the other linkage of the same pair. The articulation axis is located in the middle of each linkage. A1 is the articulation axis of the first pair of linkages 16-1. A2 is the articulation axis of the second pair 16-2, and A3 is the articulation axis of the third pair 16-3.

As illustrated on figure 3, a lever 17 is articulated around a pivot axis 18. The actuation lever 17 is linked to a connecting rod 19, itself linked to the first pair of linkages of the scissor mechanism 15. The lever 17 is rotated when the actuation cable 3 is pulled, which in turn pushes the connecting rod 19 and deploys the scissor mechanism 15. The load bearing elements are thus spread from one another and the collapsible step member 4 is deployed.

The amplitude of the movement between two consecutive elements add-up to generate a total stroke of the mobile base plate 9 relatively to the fixed base plate 6. As the collapsible step member 4 is deployed, the gap between two consecutive elements, measured along the translation axis T, increases. In part A of figure 10, sign d1 shows the gap between two consecutive load bearing members. In part B, the gap is d2, which is larger than d1, corresponding to a more deployed position.

In the embodiment represented on figure 3, a first scissor mechanism 15-1 is disposed at a first axial end of the fixed step member 6, of the load bearing elements 12 and of the mobile step member 9. In this embodiment, a second scissor mechanism 15-2 is disposed at a second axial end of the fixed step member 6, of the load bearing elements 12 and of the mobile step member 9. Having one scissor mechanism 15-1, 15-2 at each axial end of the elements provides a better guiding of the mobile elements.

In an embodiment illustrated on figure 11, an articulation axis of a pair of linkages is located on a load bearing member. More precisely, the articulation axis A1, A2, A3 of each pair of linkages 16-1, 16-2, 16-3 is located on the corresponding load bearing member 12-1, 12-2, 12-3. An articulation axis between a linkage from one pair of linkages and a linkage from the consecutive pair of linkages is located halfway between the corresponding load bearings elements. For example, the articulation axis B12a, B12b between a linkage from the pair of linkages 16-1 and a linkage from the consecutive pair of linkages 16-2 is located halfway between the load bearings element 12-1 and the load bearings element 12-2.

In an embodiment illustrated on figure 10, an articulation axis between a linkage from one pair of linkages and a linkage from the consecutive pair of linkages is located within a load bearing member. For example, the articulation axis B12a, B12b between a linkage from the pair of linkages 16-1 and a linkage from the consecutive pair of linkages 16-2 is located within the load bearing element 12-2.

The articulation axis B12a, B12b are housed in a cavity of the load bearing member 12-2. The articulation axis are distant from the walls defining the cavity to allow the articulation axis to move inside the cavity during the deployment stroke. This arrangement is repeated the same way for the other load bearing elements.

The operation of a collapsible member 4 has been described. Several such collapsible members may be implemented on the same vehicle.

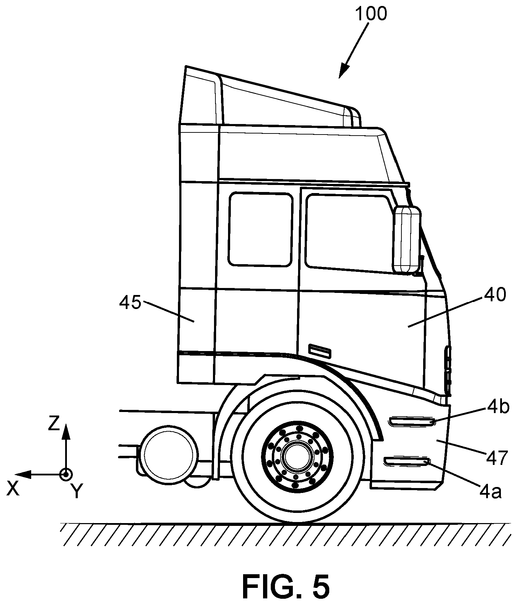

According to an embodiment of the truck 100, illustrated on figure 5, the collapsible step assembly 1 comprises a first collapsible member 4a. The collapsible step assembly 1 also comprises a second collapsible member 4b configured to be moved from the stowed position S to the deployed position E synchronously with the collapsible step assembly 1a. The two collapsible step members 4a, 4b are fitted at different heights, on the same lateral side of the truck 100, and are deployed together when the entry door 40 is opened. This arrangement reduces the gap between two consecutive supports available to the users. The truck side surface in the area 47 close to the first collapsible member 4a and second collapsible member 4b can be smooth allowing a clean airflow along the surface of the truck 100.

According to another embodiment, illustrated on figure 6, the truck 100 comprises a first collapsible step assembly 1 as described earlier and a second collapsible step assembly 1b as described earlier. The first collapsible step assembly 1 comprises a first collapsible step member 4 configured to be moved from the stowed position S to the deployed position E by the actuation cable 3 in response to an opening of a first entry door 40,
and the second collapsible step assembly 1b comprises a second step member 4b configured to be moved from the stowed position S to the deployed position E by the actuation cable 3 in response to an opening of a second entry door 40b.

Similar collapsible step assemblies 1a, 1b can be fitted on either side of the truck 100. One device 1a is deployed when the driver door 40 is opened and the other device 1b is deployed when the passenger door 40b is opened. The operation of the device 1b equipping the passenger's door 40b is similar to the operation of the device 1a equipping the driver's door.

Considering the orientation of the collapsible step member 4 relatively to the truck structure, the translation axis T can make an angle comprises between 0° and 5° with a transversal axis Y of the truck. This is for example the case for the collapsible step member 4 controlled by the operation of the driver's door of the truck of figure 6.

Alternatively, the translation axis T can make an angle h larger than 10° with a transversal axis Y of the truck. This is the case for the collapsible step member 4b controlled by the operation of the passenger's door on figure 6. The access to the cabin 50 can be made easier because more room is made available between the step and the rotation axis of the entry door 40b.

In a non-represented embodiment, two collapsible step members can be fitted on each lateral side of the industrial vehicle 100.

## Claims

1. A collapsible step assembly (1) for helping a user entering a cabin (50) of an industrial vehicle (100),
the collapsible step assembly (1) comprising:
- a collapsible step member (4) configured to be movable between :
-- a stowed position (S) in which the collapsible step member (4) is set-back from or flush with an external surface of the industrial vehicle (100), and
-- a deployed position (E) in which the collapsible step member (4) projects out of the external surface of the industrial vehicle (100),
- an actuation member (3) configured to link the collapsible step member (4) and an entry door of the cabin (40),
in which the collapsible step member (4) is configured to be moved along a translation axis (T) from the stowed position (S) to the deployed position (E) by the actuation member (3) in response to an opening of the entry door (40),
in which the collapsible step member (4) comprises:
- a fixed step member (6) comprising a fixed base plate (7) and at least a first translation shaft (8) extending from the fixed base plate (7) in a direction parallel to the translation axis (T),
- a mobile step member (9) comprising a mobile base plate (10) and at least a second translation shaft (11) extending from the mobile base plate (10) in a direction parallel to the translation axis (T), the collapsible step assembly (1) further comprising at least a load bearing element (12) arranged between the fixed base plate (7) and the mobile base plate (10) in a direction parallel to the translation axis (T), the load bearing element (12) being mechanically linked to the mobile step member (9),
in which the load bearing element (12) comprises :
a first reception hole (13) configured to receive the first translation shaft (8),
a second reception hole (14) configured to receive the second translation shaft (11),
and in which the load bearing element (12) is configured to transmit to the fixed step member (6) via the first translation shaft (8) a mechanical load applied to the mobile step member (9) alonga direction perpendicular to the translation axis (T).

2. The collapsible step assembly (1) according to claim 1, in which the actuation member (3) is an actuation cable (3).

3. The collapsible step assembly (1) according to claim 2, comprising:
- a check link (2) configured to be linked to the entry door (40) of the cabin (50),
in which the actuation cable (3) is configured to link the collapsible step member (4) and the check link (2).

4. The collapsible step assembly (1) according to the preceding claim, in which the check link (2) is configured for stopping the entry door (40) in a predetermined stopping position, the predetermined stopping position being an intermediate position between a closed position (C) and a fully opened position (O).

5. The collapsible step assembly (1) according to one of the preceding claims, comprising an elastic member (5) configured for moving the collapsible step member (4) from the deployed position (E) to the stowed position (S) in response to a closing of the entry door (40).

6. The collapsible step assembly (1) according to one of the preceding claims, in which a rate of increase of a position of the mobile step member (9) is proportional to a rate of increase of an opening degree of the entry door (40), at least for a fraction of a movement stroke from the stowed position (S) to the deployed position (E).

7. The collapsible step assembly (1) according to one of the preceding claims, in which the fixed step member (6) comprises two first translation shafts (8) extending in a direction parallel to the translation axis (T) and the mobile step member (9) comprises two second translation shafts (11) extending in a direction parallel to the translation axis (T), one first translation shaft (8) and one second translation shaft (11) being arranged alternately along a direction (N) of extension of the fixed base plate (7).

8. The collapsible step assembly (1) according to one of the preceding claims , in which the collapsible step assembly (1) comprises a plurality of load bearing elements (12), each load bearing element (12) comprising :
a first reception hole (13) configured to receive the first translation shaft (8),
a second reception hole (14) configured to receive the second translation shaft (11),
in which the load bearing elements (12) are disposed next to the other along the translation axis (T),
in which each load bearing element (12) is mechanically linked to the mobile step member (9),
and in which each load bearing element (12) is configured to transmit to the fixed step member (6) a mechanical load applied to the mobile step member (9) along a direction perpendicular to the translation axis (T).

9. The collapsible step assembly (1) according to one of the preceding claims, comprising a scissor mechanism (15) linking together the fixed step member (6), the load bearing elements (12) and the mobile step member (9).

10. A truck (100) comprising a collapsible step assembly (1) according to one of the preceding claims in combination with claim 2, in which the actuation cable (3) links the collapsible step member (4) and an entry door of the cabin (40),
and in which the collapsible step member (4) is moved from the stowed position (S) to the deployed position (E) by the actuation cable (3) in response to an opening of the entry door (40).

11. The truck (100) according to the preceding claim, in which the translation axis (T) makes an angle comprises between 0° and 5° with a transversal axis (Y) of the truck.

12. The truck (100) according to claim 10 or 11, in which the collapsible step assembly (1) comprises a second collapsible member (4) configured to be moved from the stowed position (S) to the deployed position (E) synchronously with the collapsible step assembly (1).

13. The truck (100) according to one of claims 10 to 12, comprising a first collapsible step assembly (1) according to one of claims 1 to 9 and a second collapsible step assembly (1b) according to one of claims 1 to 9, in which
the first collapsible step assembly (1) comprises a first collapsible step member (4) configured to be moved from the stowed position (S) to the deployed position (E) by the actuation cable (3) in response to an opening of a first entry door (40),
and in which
the second collapsible step assembly (1b) comprises a second step member (4b) configured to be moved from the stowed position (S) to the deployed position (E) by the actuation cable (3) in response to an opening of a second entry door (40b).

## Patentansprüche

1. Zusammenklappbare Stufenanordnung (1) zum Unterstützen eines Benutzers beim Einsteigen in eine Kabine (50) eines Industriefahrzeugs (100),
die zusammenklappbare Stufenanordnung (1) umfassend:
- ein zusammenklappbares Stufenelement (4), das konfiguriert ist, um bewegbar zu sein zwischen:
- einer verstauten Position (S), in der das zusammenklappbare Stufenelement (4) von einer Außenfläche des Industriefahrzeugs (100) zurückgesetzt oder damit bündig ist, und
- einer ausgeklappten Position (E), in der das zusammenklappbare Stufenelement (4) aus der Außenfläche des Industriefahrzeugs (100) hervorsteht,
- ein Betätigungselement (3), das konfiguriert ist, um das zusammenklappbare Stufenelement (4) und eine Eingangstür der Kabine (40) zu verbinden,
wobei das zusammenklappbare Stufenelement (4) konfiguriert ist, um als Reaktion auf ein Öffnen der Eingangstür (40) durch das Betätigungselement (3) entlang einer Translationsachse (T) von der verstauten Position (S) in die ausgeklappte Position (E) bewegt zu werden,
wobei das zusammenklappbare Stufenelement (4) Folgendes umfasst:
- ein festes Stufenelement (6), umfassend eine feste Grundplatte (7) und mindestens eine erste Translationswelle (8), die sich von der festen Grundplatte (7) in einer Richtung parallel zu der Translationsachse (T) erstreckt,
- ein bewegliches Stufenelement (9), umfassend eine bewegliche Grundplatte (10) und mindestens eine zweite Translationswelle (11), die sich von der beweglichen Grundplatte (10) in einer Richtung parallel zu der Translationsachse (T) erstreckt, wobei die zusammenklappbare Stufenanordnung (1) ferner mindestens ein Lasttragelement (12) umfasst, das zwischen der festen Grundplatte (7) und der beweglichen Grundplatte (10) in einer Richtung parallel zu der Translationsachse (T) angeordnet ist,
wobei das Lasttragelement (12) mechanisch mit dem beweglichen Stufenelement (9) verbunden ist,
wobei das lasttragende Element (12) Folgendes umfasst:
ein erstes Aufnahmeloch (13), das zum Aufnehmen der ersten Translationswelle (8) konfiguriert ist,
ein zweites Aufnahmeloch (14), das zum Aufnehmen der zweiten Translationswelle (11) konfiguriert ist,
und wobei das lasttragende Element (12) konfiguriert ist, um über die erste Translationswelle (8) eine mechanische Last, die auf das mobile Stufenelement (9) in einer Richtung senkrecht zu der Translationsachse (T) ausgeübt wird, auf das feste Stufenelement (6) zu übertragen.

2. Zusammenklappbare Stufenanordnung (1) nach Anspruch 1, wobei das Betätigungselement (3) ein Betätigungskabel (3) ist.)

3. Zusammenklappbare Stufenanordnung (1) nach Anspruch 2, umfassend:
- ein Kontrollglied (2), das konfiguriert ist, um mit der Eingangstür (40) der Kabine (50) verbunden zu sein,
wobei das Betätigungskabel (3) konfiguriert ist, um das zusammenklappbare Stufenelement (4) und das Kontrollglied (2) zu verbinden.

4. Zusammenklappbare Stufenanordnung (1) nach dem vorherigen Anspruch, wobei das Rückhalteglied (2) konfiguriert ist, um die Eingangstür (40) in einer vorbestimmten Halteposition anzuhalten, wobei die vorbestimmte Halteposition eine Zwischenposition zwischen einer geschlossenen Position (C) und einer vollständig geöffneten Position (O) ist.

5. Zusammenklappbare Stufenanordnung (1) nach einem der vorherigen Ansprüche, umfassend ein elastisches Element (5), das konfiguriert ist, um das zusammenklappbare Stufenelement (4) als Reaktion auf ein Schließen der Eingangstür (40) von der ausgeklappten Position (E) in die verstaute Position (S) zu bewegen.

6. Zusammenklappbare Stufenanordnung (1) nach einem der vorherigen Ansprüche, wobei eine Steigerungsrate einer Position des beweglichen Stufenelements (9) proportional zu einer Steigerungsrate eines Öffnungsgrads der Eingangstür (40) ist, zumindest für einen Bruchteil eines Bewegungshubs von der verstauten Position (S) in die ausgeklappte Position (E).

7. Zusammenklappbare Stufenanordnung (1) nach einem der vorherigen Ansprüche, wobei das feste Stufenelement (6) zwei erste Translationswellen (8) aufweist, die sich in einer Richtung parallel zu der Translationsachse (T) erstrecken, und das bewegliche Stufenelement (9) zwei zweite Translationswellen (11) umfasst, die sich in einer Richtung parallel zu der Translationsachse (T) erstrecken, wobei eine erste Translationswelle (8) und eine zweite Translationswelle (11) abwechselnd entlang einer Erstreckungsrichtung (N) der festen Grundplatte (7) angeordnet sind.

8. Zusammenklappbare Stufenanordnung (1) nach einem der vorherigen Ansprüche, wobei die zusammenklappbare Stufenanordnung (1) eine Vielzahl von lasttragenden Elementen (12) umfasst, wobei jedes lasttragende Element (12) Folgendes umfasst:
ein erstes Aufnahmeloch (13), das zum Aufnehmen der ersten Translationswelle (8) konfiguriert ist,
ein zweites Aufnahmeloch (14), das zum Aufnehmen der zweiten Translationswelle (11) konfiguriert ist,
wobei die lasttragenden Elemente (12) entlang der Translationsachse (T) nebeneinander angeordnet sind, wobei jedes lasttragende Element (12) mechanisch mit dem beweglichen Stufenelement (9) verbunden ist,
und wobei jedes lasttragende Element (12) konfiguriert ist, um auf das feste Stufenelement (6) eine mechanische Last zu übertragen, die auf das bewegliche Stufenelement (9) entlang einer Richtung senkrecht zu der Translationsachse (T) ausgeübt wird.

9. Zusammenklappbare Stufenanordnung (1) nach einem der vorherigen Ansprüche, umfassend einen Scherenmechanismus (15), der das feste Stufenelement (6), die lasttragenden Elemente (12) und das mobile Stufenelement (9) miteinander verbindet.

10. Lastkraftwagen (100), umfassend eine zusammenklappbare Stufenanordnung (1) nach einem der vorherigen Ansprüche in Verbindung mit Anspruch 2, wobei das Betätigungskabel (3) das zusammenklappbare Stufenelement (4) und eine Eingangstür der Kabine (40) verbindet,
und wobei das zusammenklappbare Stufenelement (4) durch das Betätigungskabel (3) als Reaktion auf ein Öffnen der Eingangstür (40) von der verstauten Position (S) in die ausgeklappte Position (E) bewegt wird.

11. Lastkraftwagen (100) nach dem vorherigen Anspruch, wobei die Translationsachse (T) einen Winkel zwischen 0° und 5° mit einer Querachse (Y) des Fahrzeugs bildet.

12. Lastkraftwagen (100) nach Anspruch 10 oder 11, wobei die zusammenklappbare Stufenanordnung (1) ein zweites zusammenklappbares Element (4) umfasst, das konfiguriert ist, um synchron mit der zusammenklappbaren Stufenanordnung (1) von der verstauten Position (S) in die ausgeklappte Position (E) bewegt zu werden.

13. Fahrzeug (100) nach einem der Ansprüche 10 bis 12, umfassend eine erste zusammenklappbare Stufenanordnung (1) nach einem der Ansprüche 1 bis 9 und eine zweite zusammenklappbare Stufenanordnung (1b) nach einem der Ansprüche 1 bis 9, wobei
die erste zusammenklappbare Stufenanordnung (1) ein erstes zusammenklappbares Stufenelement (4) umfasst, das konfiguriert ist, um durch das Betätigungskabel (3) als Reaktion auf ein Öffnen einer ersten Eingangstür (40) von der verstauten Position (S) in die ausgeklappte Position (E) bewegt zu werden,
und wobei
die zweite zusammenklappbare Stufenanordnung (1b) ein zweites Stufenelement (4b) umfasst, das konfiguriert ist, um als Reaktion auf ein Öffnen einer zweiten Eingangstür (40b) durch das Betätigungskabel (3) von der verstauten Position (S) in die ausgeklappte Position (E) bewegt zu werden.

## Revendications

1. Ensemble marchepied pliant (1) pour aider un utilisateur à entrer dans une cabine (50) d'un véhicule industriel (100),
l'ensemble marchepied pliant (1) comprenant :
- un élément de marchepied pliant (4) configuré pour pouvoir être déplacé entre :
-- une position de rangement (S) dans laquelle l'élément de marchepied pliant (4) est en retrait par rapport à ou aligné avec une surface extérieure du véhicule industriel (100), et
-- une position déployée (E) dans laquelle l'élément de marchepied pliant (4) dépasse de la surface extérieure du véhicule industriel (100),
- un élément d'actionnement (3) configuré pour relier l'élément de marchepied pliant (4) et une porte d'entrée de la cabine (40),
dans lequel l'élément de marchepied pliant (4) est configuré pour être déplacé le long d'un axe de translation (T) de la position rangée (S) à la position déployée (E) par l'élément d'actionnement (3) en réponse à une ouverture de la porte d'entrée (40),
dans lequel l'élément de marchepied pliant (4) comprend :
- un élément de marchepied fixe (6) comprenant une plaque de base fixe (7) et au moins un premier arbre de translation (8) s'étendant à partir de la plaque de base fixe (7) dans une direction parallèle à l'axe de translation (T),
- un élément de marchepied mobile (9) comprenant une plaque de base mobile (10) et au moins un second arbre de translation (11) s'étendant à partir de la plaque de base mobile (10) dans une direction parallèle à l'axe de translation (T), l'ensemble marchepied pliant (1) comprenant en outre au moins un élément porteur de charge (12) disposé entre la plaque de base fixe (7) et la plaque de base mobile (10) dans une direction parallèle à l'axe de translation (T), l'élément porteur de charge (12) étant lié mécaniquement à l'élément de marchepied mobile (9),
dans lequel l'élément porteur de charge (12) comprend :
un premier trou de réception (13) configuré pour recevoir le premier arbre de translation (8),
un second trou de réception (14) configuré pour recevoir le second arbre de translation (11),
et dans lequel l'élément porteur de charge (12) est configuré pour transmettre à l'élément de marchepied fixe (6) par l'intermédiaire du premier arbre de translation (8) une charge mécanique appliquée à l'élément de marchepied mobile (9) le long d'une direction perpendiculaire à l'axe de translation (T).

2. Ensemble marchepied pliant (1) selon la revendication 1, dans lequel l'élément d'actionnement (3) est un câble d'actionnement (3).

3. Ensemble marchepied pliant (1) selon la revendication 2, comprenant :
- une liaison de contrôle (2) configurée pour être reliée à la porte d'entrée (40) de la cabine (50),
dans lequel le câble d'actionnement (3) est configuré pour relier l'élément de marchepied pliant (4) et la liaison de contrôle (2).

4. Ensemble marchepied pliant (1) selon la revendication précédente, dans lequel la liaison de contrôle (2) est configurée pour arrêter la porte d'entrée (40) dans une position d'arrêt prédéterminée, la position d'arrêt prédéterminée étant une position intermédiaire entre une position fermée (C) et une position complètement ouverte (O).

5. Ensemble marchepied pliant (1) selon l'une quelconque des revendications précédentes, comprenant un élément élastique (5) configuré pour déplacer l'élément de marchepied pliant (4) de la position déployée (E) à la position rangée (S) en réponse à une fermeture de la porte d'entrée (40).

6. Ensemble marchepied pliant (1) selon l'une des revendications précédentes, dans lequel une vitesse d'augmentation d'une position de l'élément de marchepied mobile (9) est proportionnelle à une vitesse d'augmentation d'un degré d'ouverture de la porte d'entrée (40), au moins pour une fraction d'une course de mouvement de la position rangée (S) à la position déployée (E).

7. Ensemble marchepied pliant (1) selon l'une des revendications précédentes, dans lequel l'élément de marchepied fixe (6) comprend deux premiers arbres de translation (8) s'étendant dans une direction parallèle à l'axe de translation (T) et l'élément de marchepied mobile (9) comprend deux seconds arbres de translation (11) s'étendant dans une direction parallèle à l'axe de translation (T), un premier arbre de translation (8) et un second arbre de translation (11) étant disposés alternativement le long d'une direction (N) d'extension de la plaque de base fixe (7).

8. Ensemble marchepied pliant (1) selon l'une des revendications précédentes, dans lequel l'ensemble marchepied pliant (1) comprend une pluralité d'éléments porteurs de charge (12), chaque élément porteur de charge (12) comprenant :
un premier trou de réception (13) configuré pour recevoir le premier arbre de translation (8),
un second trou de réception (14) configuré pour recevoir le second arbre de translation (11),
dans lequel les éléments porteurs de charge (12) sont disposés les uns à côté des autres le long de l'axe de translation (T), dans lequel chaque élément porteur de charge (12) est lié mécaniquement à l'élément de marchepied mobile (9),
et dans lequel chaque élément porteur de charge (12) est configuré pour transmettre à l'élément de marchepied fixe (6) une charge mécanique appliquée à l'élément de marchepied mobile (9) le long d'une direction perpendiculaire à l'axe de translation (T).

9. Ensemble marchepied pliant (1) selon l'une des revendications précédentes, comprenant un mécanisme de ciseaux (15) reliant l'élément de marchepied fixe (6), les éléments porteurs de charge (12) et l'élément de marchepied mobile (9).

10. Camion (100) comprenant un ensemble marchepied pliant (1) selon l'une des revendications précédentes en combinaison avec la revendication 2, dans lequel le câble d'actionnement (3) relie l'élément de marchepied pliant (4) et une porte d'entrée de la cabine (40), et dans lequel l'élément de marchepied repliable (4) est déplacé de la position rangée (S) à la position déployée (E) par le câble d'actionnement (3) en réponse à une ouverture de la porte d'entrée (40).

11. Camion (100) selon la revendication précédente, dans lequel l'axe de translation (T) forme un angle compris entre 0° et 5° avec un axe transversal (Y) du camion.

12. Camion (100) selon la revendication 10 ou 11, dans lequel l'ensemble marchepied pliant (1) comprend un second élément de marchepied pliant (4) configuré pour être déplacé de la position rangée (S) à la position déployée (E) de manière synchronisée avec l'ensemble marchepied pliant (1).

13. Camion (100) selon l'une des revendications 10 à 12, comprenant un premier ensemble marchepied pliant (1) selon l'une des revendications 1 à 9 et un second ensemble marchepied pliant (1b) selon l'une des revendications 1 à 9, dans lequel
le premier ensemble marchepied pliant (1) comprend un premier élément de marchepied pliant (4) configuré pour être déplacé de la position rangée (S) à la position déployée (E) par le câble d'actionnement (3) en réponse à une ouverture d'une première porte d'entrée (40),
et dans lequel
le second ensemble marchepied pliant (1b) comprend un second élément de marchepied (4b) configuré pour être déplacé de la position rangée (S) à la position déployée (E) par le câble d'actionnement (3) en réponse à une ouverture d'une seconde porte d'entrée (40b).
